# EUROPÄISCHE PATENTSCHRIFT

(11) **EP 0 876 754 B1**
(45) Veröffentlichungstag und Bekanntmachung des Hinweises auf die Patenterteilung: **30.01.2002**
(21) Anmeldenummer: 98104435.7
(22) Anmeldetag: 12.03.1998
(51) Int. Cl.: A01F 15/10, A01D 90/04

(54) **Rundballenpresse für landwirtschaftliches Erntegut**
Rotobaler for agricultural crops
Presse à balles rondes pour produits agricoles

(30) Priorität: 06.05.1997 DE 29708035 U
(43) Veröffentlichungstag der Anmeldung: 11.11.1998
(73) Patentinhaber: Usines Claas France, 57141 Metz (FR)
(72) Erfinder: Scholz, Egbert, 33378 Rheda-Wiedenbrück (DE)
(74) Vertreter: Weeg, Thomas

(56) Entgegenhaltungen:
- EP-A- 0 341 508
- CH-A- 418 044

## Beschreibung

Die Neuerung betrifft eine Schneideinrichtung für landwirtschaftliches Erntegut, wie sie in Rundballenpressen, Kanalpressen sowie in Ladewagen Anwendung finden, um das Erntegut vom Feld aufzunehmen, es zu zerkleinern und danach zu verpressen bzw. auf einer Ladefläche zu speichern. Aus dem vorgenannten Anwendungsbereich wird die Neuerung bei einer Rollballenpresse beispielsweise nachstehend dargestellt und beschrieben. Derartige Erntemaschinen sind mit einem Förderkanal ausgerüstet, dem von einem Aufnahmeorgan, vorzugsweise einer Pick-Up Halmgut zugeführt wird und in den höhenverschwenkbare, in Reihe angeordnete, Schneidmesser durch Schlitze im Kanalboden heineinragen, die in ihrer Außerschneidstellung an Anschlägen anliegen, wobei sie die Schlitze im Kanalboden mit ihren schneidwirksamen Bereichen derart abdecken, daß ein nahezu lückenloser Kanalboden gebildet wird.

Rundballenpressen mit derartigen Schneideinrichtungen sind beispielsweise aus der DE-OS 43 02 199 bekannt. Sie arbeiten mit Hinblick auf die Vorzerkleinerung des Halmgutes allerdings nur dann zufriedenstellend, wenn die einzelnen Messer je nach dem Grad ihrer Abnutzung oder auch nach Beschädigung beispielsweise durch Steinschlag individuell nachgeschliffen werden. Mehrmaliges Schleifen einzelner Messer bedeutet aber, daß sich die schneidwirksamen Bereiche einzelner Messer in ihrer "Außerschneidstellung" mehr oder weniger unterhalb des Kanalbodens befinden, so daß die ihnen zugeordneten Schlitze nicht mehr abgedeckt sind. In diesen Schlitzen kann sich dann Erntegut absetzen, was letztendlich zu einem Stau führen kann. Der vorliegenden Neuerung liegt daher das Problem zugrunde, eine Ballenpresse der Eingangs näher bezeichneten Art so auszubilden, daß unabhängig davon, wie oft einzelne Messer nachgeschliffen sind, ihre schneidwirksamen Bereiche die entsprechenden Schlitze abdecken. Dies wird neuerungsgemäß dadurch erreicht, daß jedem Schneidmesser ein separat verstellbarer unterhalb des Kanalbodens befindlicher Anschlag zugeordnet ist. Auf diese Weise ist es möglich, die Lage eines jeden Schneidmessers in seiner "Außerschneidstellung" so zu bestimmen, daß der dem Messer zugeordnete Schlitz im Kanalboden nahezu vollständig vom schneidwirksamen Bereich eines Messers abgedeckt ist, und zwar unabhängig davon, wie oft jedes Messer nachgeschliffen ist. Auf konstruktiv einfache Art und Weise sind die Anschläge mit einer unterhalb des Kanalbodens befestigten Konsole verbunden. Die Konsole kann dabei als ein mit von den Schneidmessern durchgreifende Schlitzen versehenes U-Profil ausgebildet sein, deren frei auslaufende Schenkel mit dem Kanalboden fest verbunden sind, wobei die Schlitzlänge durch verstellbare Messeranschläge veränderbar ist. Alternativ hierzu kann die Konsole als ein in Achsrichtung des Schneidrotors verlaufender abgekanteter Blechstreifen ausgebildet sein, dessen frei auslaufender Schenkel der Anzahl der Messer entsprechende Stellschrauben aufnimmt.

Im folgenden soll die Neuerung anhand eines Ausführungsbeispieles und mehrerer dieses schematisch darstellender Figuren näher erläutert werden. Dabei zeigt,
- Figur 1: eine Rundballenpresse in der Seitenansicht,
- Figur 2: einen Teil der in Figur 1 dargestellten Rundballenpresse in vergrößerter Dar stellung und
- Figur 3: den in Figur 2 dargestellten Anschlag für ein Messer in abgewandelter Form.

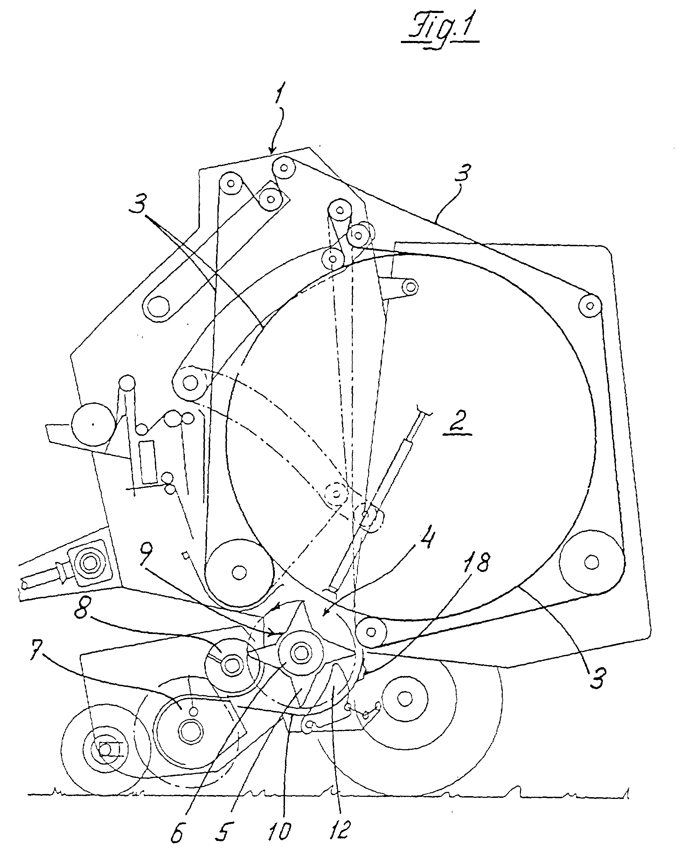

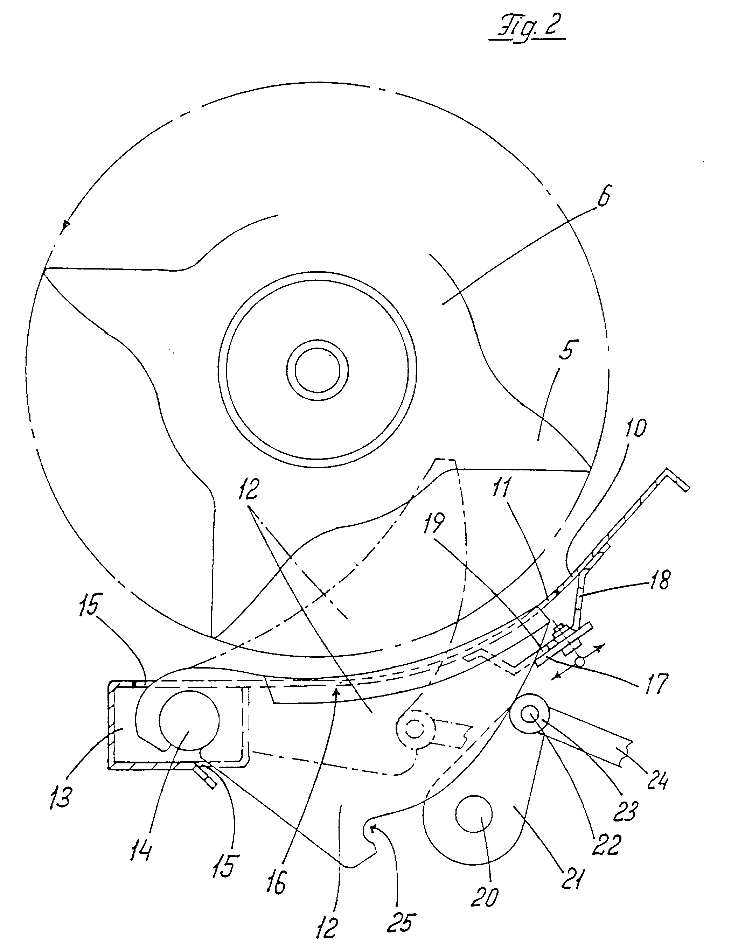

Mit 1 ist eine Rundballenpresse bezeichnet, deren eigentlicher Preßraum 2 umfangsseitig von Bändern 3 begrenzt ist. Diese Bänder 3 sind so angeordnet, daß sie eine Guteinlaßöffnung 4 freilassen Dieser Guteinlaßöffnung 4 ist ein mit Förderzinken 5 besetzter Rotor 6 vorgeordnet Das durch eine Pick-Up 7 vom Acker aufgehobene Erntegut wird dem Rotor 6 über seitliche Schnecken 8 zugeführt. Die dem Preßraum 2 vorgeordneten Organe (5 bis 8) sind in einem Kanal 9 angeordnet, dessen unterer Boden 10 eine Vielzahl von mit Abstand nebeneinander angeordneten Schlitzen 11 aufweist. Durch diese Schlitze greifen von unten Schneidmesser 12 hindurch, die in ihrer in Figur 1 dargestellten Stellung im Zusammenwirken mit den Förderzinken 5 des Rotors 6 das zugeführte Halmgut zerkleinern. Zwecks Lagerung der Schneidmesser 12 ist eine zur Drehachse des Rotors 6 parallel verlaufende Quertraverse 13 vorgesehen, durch die sich eine Achse 14 erstreckt, die in den nicht dargestellten Seitenwänden der Rundballenpresse festgelagert ist. Auf diese Achse 14 sind die Schneidmesser 12 aufgesetzt, die durch Schlitze 15 nach außen ragen. Die Schlitze 15 bilden eine Verlängerung der im Kanalboden 10 vorgesehenen Schlitze 11. In der in Figur 2 dargestellten Lage der Messer 12 sind diese in "Außerschneidstellung" gebracht; d. h., die Schneidmesser sind nur so weit im Uhrzeigersinn verschwenkt, daß ihre schneidwirksamen Bereiche 16 die Schlitze 11 noch abdecken, so daß hierdurch ein nahezu durchgehender Kanalboden 10 entsteht und das Gut reibungslos von den Förderzinken 5 durch die Guteinlaßöffnung 4 in den Preßraum 2 gefördert werden kann. Um zu erreichen, daß alle Gegenmesser unabhängig davon, wie oft sie nachgeschliffen sind, auch tatsächlich den jeweils ihnen zugeordneten Schlitz sauber abdecken, ruht jedes Messer 12 auf einem verstellbaren Anschlag 17 auf, der mit einer Konsole 18 verschraubt ist. Diese Konsole 18 weist ebenso wie der Kanalboden 10 Schlitze 19 auf, durch die die Messer 12 hindurchgeführt werden können, und zwar so weit, bis sich jeweils ein Messer auf einem Anschlag 17 abstützt. Jedes Messer 12 kann demzufolge durch Verstellung des entsprechenden Anschlages um die Achse 14 so weit verschwenkt werden, daß es in "Außerschneidstellung" mit seinem schneidwirksamen Bereich 16 zuverlässig den ihm zugeordneten Schlitz abdeckt. Die Konsole 18 selbst ist von unten mit dem Kanalboden 10 beispielsweise verschweißt. Um nun die Messer 12 aus ihrer Ruhelage heraus in die mit strichpunktierten Linien dargestellte Schneidstellung zu verschwenken, sind auf einer Achse 20 zwei Hebel 21 drehfest aufgesetzt, die mit ihren der Achse 20 abgewandten Enden zwischen sich eine Welle 22 aufnehmen. Auf diese Welle 22 ist eine Stützrolle 23 aufgesetzt, die durch Betätigung des Armes 24, der mit der Welle 22 verbunden ist, um die Achse 20 im Gegenuhrzeigersinn so weit verschwenkt werden kann, bis die Messer 12 die mit strichpunktierten Linien dargestellte Lage erreicht hat und sich die Stützrolle 23 in die Rasten 25 der Messer 12 eindrückt. Hierdurch ist eine gesicherte Schneidstellung der Messer 12 gewährleistet.

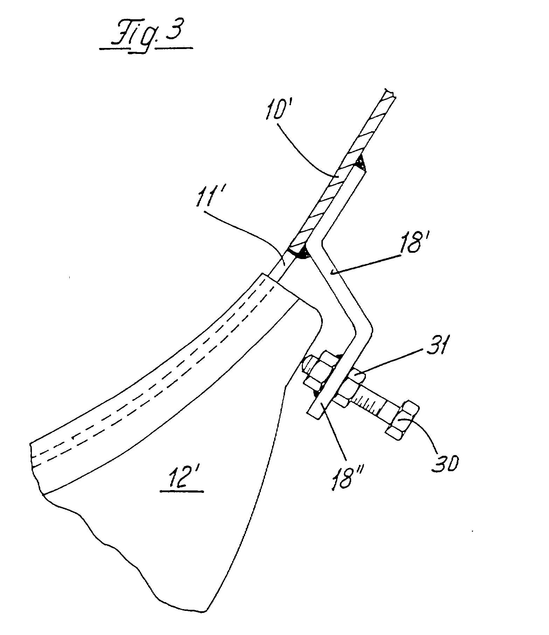

In abgewandelter Form kann, wie die Figur 3 zeigt, die Konsole 18 als abgewinkelter Blechstreifen 18' ausgebildet sein, der mit dem Kanalboden 10' einendig verschweißt ist. In den frei auslaufenden Schenkel 18" des Blechsstreifens 18' sind entsprechend der Anzahl der Messer 12 Stellschrauben 30 eingedreht, die durch Kontermuttern 31 lagegesichert werden können. Durch diese Stellschrauben 30 können die Schneidmesser 12' so eingestellt werden, daß ihre schneidwirksamen Bereiche die Schlitze 11' nahezu übergangslos abdecken, so daß ein durchgehender Kanalboden 10' entsteht, auf dem sich durchlaufendes Erntegut nicht verhaken oder aufstauen kann.

## Patentansprüche

1. Schneideinrichtung für landwirtschaftliches Erntegut mit einem Förderkanal, dem von einem Aufnahmeorgan, vorzugsweise einer Pick-Up Halmgut zugeführt wird und in dem höhenverschwenkbare, in Reihe angeordnete, Schneidmesser durch Schlitze im Kanalboden hineinragen, die in ihrer Außerschneidstellung an Anschlägen anliegen, wobei sie die Schlitze im Kanalboden mit ihren schneidwirksamen Bereichen derart abdecken, daß ein nahezu lückenloser Kanalboden gebildet wird,
**dadurch gekennzeichnet,**
**daß** jedem Schneidmesser (12) eine separat verstellbarer unterhalb des Kanalbodens (10 bzw. 10') befindlicher Anschlag (17 bzw. 30) zugeordnet ist.

2. Schneideinrichtung für landwirtschaftliches Erntegut nach Anspruch 1,
**dadurch gekennzeichnet,**
**daß** die Anschläge (17 bzw. 30) mit einer unterhalb des Kanalbodens (10 bzw. 10') befestigten Konsole (18 bzw. 18') verbunden sind.

3. Schneideinrichtung für landwirtschaftliches Erntegut nach den Ansprüchen 1 und 2,
**dadurch gekennzeichnet,**
**daß** die Konsole (18) als ein mit von den Schneidmessern (12) durchgreifende Schlitzen (11) versehenes U-Profil gebildet ist, deren frei auslaufende Schenkel mit dem Kanalboden fest verbunden sind, wobei die Schlitzlänge durch verstellbare Messeranschläge (17) veränderbar sind.

4. Schneideinrichtung für landwirtschaftliches Erntegut nach den Ansprüchen 1 and 2,
**dadurch gekennzeichnet,**
**daß** die Konsole als ein in Achsrichtung des Rotors (6) verlaufender abgekanteter Blechstreifen (18') ausgebildet ist, dessen frei auslaufender Schenkel (18") der Anzahl der Messer (12') entsprechende Stellschrauben (30) aufnimmt.

## Claims

1. A cutting device for agricultural crop material comprising a conveyor passage to which stalk material is fed by a lifter member, preferably a pick-up, and in which cutting blades project through slots in the bottom of the passage, which cutting blades are arranged in a row and are pivotable in respect of height and bear against abutments in their non-cutting position, wherein they cover the slots in the bottom of the passage with their operative cutting regions in such a way that an almost gap-free passage bottom is formed, **characterised in that** associated with each cutting blade (12) is a separately displaceable abutment (17 and 30 respectively) disposed beneath the passage bottom (10 and 10' respectively).

2. A cutting device for agricultural crop material according to claim 1 **characterised in that** the abutments (17 and 30 respectively) are connected to a bracket (18 and 18' respectively) fixed beneath the passage bottom (10 and 10' respectively).

3. A cutting device for agricultural crop material according to claims 1 and 2 **characterised in that** the bracket (18) is in the form of a U-shaped member which is provided with slots (11) through which the cutting blades (12) project, the freely extending limbs of the U-shaped member being fixedly connected to the passage bottom, wherein the slot lengths are variable by means of displaceable blade abutments (17).

4. A cutting device for agricultural crop material according to claims 1 and 2 **characterised in that** the bracket is in the form of a canted sheet metal strip (18') which extends in the axial direction of the rotor (6) and whose freely terminating limb (18") receives adjusting screws (30) corresponding to the number of blades (12').

## Revendications

1. Système de coupe pour récolte agricole, comprenant un canal d'alimentation auquel du produit fauché est amené par un organe de chargement, de préférence par un ramasseur, et dans lequel des couteaux disposés en ligne, pivotants en hauteur, pénètrent par des fentes ménagées dans le fond du canal et, en position hors coupe, reposent sur des butées, lesdits couteaux recouvrant les fentes du fond du canal par leurs zones à action coupante de façon à former un fond de canal pratiquement interrompu, **caractérisé en ce qu'**à chaque couteau (12) est associée une butée (17 et, respectivement, 30) montée avec une possibilité de réglage individuel au-dessous du fond de canal (10 et, respectivement, 10').

2. Système de coupe pour récolte agricole selon la revendication 1, **caractérisé en ce que** les butées (17 et, respectivement, 30) sont reliées à une console (18 et, respectivement, 18') fixée audessous du fond de canal (10 et, respectivement, 10').

3. Système de coupe pour récolte agricole selon les revendications 1 et 2, **caractérisé en ce que** la console (18) est conçue sous la forme d'un profilé en U qui est pourvu de fentes (11) traversées par les couteaux (12) et dont les extrémités libres des ailes sont solidarisées au fond de canal, la longueur des fentes pouvant être modifiée par l'intermédiaire de butées de couteaux réglables (17).

4. Système de coupe pour récolte agricole selon les revendications 1 et 2, **caractérisé en ce que** la console est conçue sous la forme d'une bande de tôle pliée (18') qui s'étend dans la direction axiale du rotor (6) et dont l'extrémité libre de l'aile (18") reçoit des vis de réglage (30) correspondant au nombre de couteaux (12').
